# FASCICULE DE BREVET EUROPEEN

(11) **EP 1 283 227 B1**
(45) Date de publication et mention de la délivrance du brevet: **31.01.2007**
(21) Numéro de dépôt: 02291576.3
(22) Date de dépôt: 25.06.2002
(51) Int. Cl.: C08F 255/02, C08F 255/00, C08F 8/46, C08L 51/04, B32B 27/32

(54) **Polypropylène greffé sur base de polypropylène isotactique obtenu par catalyse métallocène**
Pfropfpolymer von isotaktischem Polypropylen erhalten durch Verwendung eines Metallocen- Katalysatoren
Graft polymer from Isotactic polypropylene obtained with a metallocene catalyst

(30) Priorité: 31.07.2001 FR 0110252
(43) Date de publication de la demande: 12.02.2003
(73) Titulaire: Arkema France, 92800 Puteaux (FR)
(72) Inventeur: Pradel, Jean-Laurent, 27300 Bernay (FR)
(74) Mandataire: Mouttet, Marie-Paule

(56) Documents cités:
- EP-A- 0 485 983
- EP-A- 1 065 245
- WO-A-00/47643
- WO-A-01/34389
- WO-A-98/26001
- US-A- 5 374 685

## Description

La présente invention concerne un polypropylène isotactique obtenu par catalyse métallocène sur lequel on greffe un monomère fonctionnel ainsi qu'une composition comprenant un tel polymère. L'invention a également pour objet une structure multicouche dont au moins l'une des couches comprend du polypropylène isotactique obtenu par catalyse métallocène dans sa composition.

Le polypropylène isotactique obtenu par catalyse métallocène et greffé par un monomère fonctionnel peut entrer dans la composition de liant de coextrusion. Le liant de coextrusion comprend du polypropylène isotactique obtenu par catalyse métallocène greffé puis éventuellement dilué dans au moins une polyoléfine (C1) et/ou dans au moins un polymère à caractère élastomérique (D).

Ces liants de coextrusion sont utiles par exemple pour fabriquer des matériaux multicouches pour l'emballage. On peut citer les matériaux comprenant un film de polyamide (PA) et un film de polypropylène(PP), le film de polypropylène pouvant être laminé sur le film de polyamide ou coextrudé avec le polyamide. Le liant de coextrusion est disposé entre le film de polypropylène et le film de polyamide pour une bonne adhésion des deux films. Ces matériaux multicouches peuvent être par exemple :
- des structures à trois couches du type par exemple PP/liant/EVOH dans lesquelles EVOH désigne un copolymère de l'éthylène et de l'alcool vinylique ou un copolymère éthylène/acétate de vinyle saponifié en partie ou en totalité, la couche de liant étant prise en sandwich entre une couche d'EVOH et une couche de PP, ou
- des structures à cinq couches du type par exemple PP/liant/EVOH/liant/PP, dans lesquelles la couche d'EVOH est prise en sandwich entre deux couches de liants, chacune d'elles étant prise en sandwich entre la couche d'EVOH et une couche de PP.

Le polymère greffé selon l'invention peut également être utile comme agent compatibilisant par exemple dans des mélanges de polyamide et de polypropylène ou dans des mélanges de polypropylène et de fibres de verre.

Le polypropylène est décrit dans Kirk-Othmer, Encyclopedia of chemical technology, 4^{ième} édition, Vol 17, pages 784-819, John Wiley & sons, 1996. La quasi-totalité du polypropylène commercialisé est constitué essentiellement de polypropylène isotactique obtenu par catalyse Ziegler-Natta contenant éventuellement un peu de polypropylène atactique.

Il existe de nombreux arts antérieurs décrivant du polypropylène greffé mais il s'agit toujours de polypropylène isotactique obtenu par catalyse Ziegler-Natta abrégé par zniPP dans la suite du texte

Le document US 5 235 149 décrit des emballages fermés par des opercules constitués d'une feuille d'aluminium, d'une couche de liant et d'une couche de polypropylène. La couche de liant de l'opercule est constituée de différents polymères greffés par l'acide acrylique ou l'anhydride maleique, les polymères peuvent être choisis parmi le polyéthylène, le polypropylène, les copolymères de l'éthylène et de l'acétate de vinyle et les copolymères de l'éthylène et de l'acrylate de méthyle.

Les documents DE 19 535 915 A et EP 689 505 décrivent un polypropylène bloc copolymère greffé pour coller des films de polypropylène sur des feuilles métalliques.

Le document EP 658 139 décrit des structures semblables à celles décrites précédemment mais le liant est un polypropylène copolymère statistique greffé comprenant de 1 à 10 % de comonomère, le rapport Mw/Mn étant compris entre 2 et 10 et le MFI (Melt flow Index ou indice de fluidité à l'état fondu) est compris entre 1 et 20/10 min (à 230°C sous 2,16 kg).

Le greffage radicalaire de monomères fonctionnels sur les polyoléfines se fait soit à l'état fondu, soit en solution en utilisant des initiateurs de radicaux comme les peroxydes, soit à l'état solide par irradiation. Sous l'action des radicaux, des réactions secondaires se produisent en même temps que la réaction de greffage. Elles conduisent à une augmentation de la masse moléculaire dans le cas où le polymère à greffer est du polyéthylène, ou à une diminution de la masse moléculaire dans le cas où c'est du polypropylène. Si la quantité de radicaux nécessaire à la réaction de greffage est importante, l'évolution de la masse moléculaire de la polyoléfine conduit à une modification importante de sa viscosité à l'état fondu. Ces greffages se font généralement en extrudeuse. La viscosité du polyéthylène greffé est alors si élevée qu'on ne peut plus l'extruder tandis que la viscosité du polypropylène greffé est si faible qu'il n'est pas non plus extrudable. Ces phénomènes obligent à réduire la quantité de fonctions réactives incorporables sur la polyoléfine par greffage radicalaire de monomères fonctionnels.

Dans le cas de mélanges de quantités quasi équivalentes de polyéthylène et de polypropylène à greffer par greffage radicalaire avec des quantités élevées de monomères fonctionnels, comme c'est le cas dans le document EP 802 207, l'augmentation de la masse moléculaire du polyéthylène greffé est compensée par la diminution de la masse moléculaire du polypropylène greffé.

On a maintenant trouvé qu'on pouvait greffer un monomère fonctionnel en grande quantité sur du polypropylène isotactique obtenu par catalyse métallocène (miPP) et que l'indice de fluidité à l'état fondu (désigné aussi par MFI, abréviation de Melt Flow Index) du miPP greffé obtenu était moins élevé que dans le cas du polypropylène isotactique obtenu par catalyse Ziegler-Natta (zniPP) greffé, rendant ainsi le miPP greffé ou les compositions le comprenant plus facilement extrudables.

De plus, on a trouvé que le miPP greffé présentait un avantage applicatif par rapport aux polypropylènes obtenus par catalyse Ziegler-Natta lors de son utilisation dans les liants de coextrusion.

L'invention a pour objet une composition comprenant :
- 10 à 100 % en poids de polypropylène isotactique homo ou copolymère obtenu par catalyse métallocène ;
- 0 à 90 % en poids de polyéthylène (A) homo ou co-polymère ;
- 0 à 90 % en poids de polymère (B) choisi parmi le polypropylène isotactique homo ou co-polymère obtenu par catalyse Ziegler-Natta (B1), le poly-(1-butène) homo ou co-polymère (B2), le polystyrène homo ou co-polymère (B3), le mélange de (B1) et (B2), le mélange de (B1) et (B3), le mélange de (B2) et (B3) et le mélange de (B1), (B2) et (B3) ;
le total des pourcentages étant égal à 100 %, ladite composition étant greffée par un monomère fonctionnel.

Selon un mode de réalisation de la composition, le monomère fonctionnel est insaturé non aromatique.

Selon un mode de réalisation de la composition, le monomère fonctionnel est pris dans le groupe comprenant les alcoxysilanes, les acides carboxyliques et leurs dérivés, les chlorures d'acides, les isocyanates, les oxazolines, les époxydes, les amines et les hydroxydes.

Selon un mode de réalisation de la composition, le monomère fonctionnel est l'anhydride maléique.

Selon un mode de réalisation de la composition, au moins un comonomère du polyéthylène (A) co-polymère est choisi parmi les alpha-oléfines ayant de 3 à 30 atomes de carbone, les esters d'acides carboxyliques insaturés, les esters vinyliques d'acides carboxyliques saturés, les époxydes insaturés, les esters et éthers de glycidyle alicycliques, les acides carboxyliques insaturés, leurs sels, leurs anhydrides et les diènes.

Selon un mode de réalisation de la composition, le polyéthylène (A) est choisi parmi le LDPE, le HDPE, le LLDPE, le VLDPE, le PE obtenu par catalyse métallocène, les élastomères EPR et EPDM et leurs mélanges, les copolymères éthylène/(méth)acrylate d'alkyle, les copolymères éthylène/(méth)acrylate d'alkyle/anhydride maléique, les copolymères éthylène/acétate de vinyle/anhydride maléique.

Selon un mode de réalisation de la composition, celle-ci est diluée dans une polyoléfine (C1) et/ou un polymère à caractère élastomérique (D).

Selon un mode de réalisation de la composition, la quantité de polyoléfine (C1) et/ou de polymère à caractère élastomérique (D) est avantageusement de 20 à 1000 et de préférence 30 à 500 parties en poids pour 10 parties de polypropylène isotactique obtenu par catalyse métallocène greffé.

Selon un mode de réalisation de la composition, les proportions de polyoléfine (C1) et de polymère à caractère élastomérique (D) sont telles que le rapport (D)/(C1) est compris entre 0 et 1 et plus particulièrement entre 0 et 0,5.

Selon un mode de réalisation de la composition, celle-ci est comprise dans un liant de coextrusion.

L'invention a également pour objet une structure multicouche comprenant une couche (L) comprenant une composition telle que décrite précédemment et directement attachée à ladite couche (L), une couche (E) :
- polaire, azotée ou oxygénée, telle qu'une couche de résine polyamide, de copolymère éthylène/acétate de vinyle saponifié (EVOH), ou de polyester ; ou
- d'un oxyde minéral déposé sur un polymère tel que le PE, le polyéthylène téréphtalate (PET) ou l'EVOH ; ou
- métallique ou métalloplastique.

Selon un mode de réalisation de la structure, celle-ci comprend une couche (F) à base de polyoléfine directement attachée à la couche (L), la couche (L) étant ainsi prise en sandwich entre ladite couche (F) et la couche (E).

La composition à base de polypropylène isotactique obtenu par catalyse métallocène (miPP) comprend éventuellement un polymère (A) désignant un polyéthylène homo ou un co-polymère et/ou un polymère (B) choisi parmi le polypropylène isotactique homo ou co-polymère (B1), le poly-1-butène homo ou co-polymère (B2), le polystyrène homo ou co-polymère (B3), le mélange de (B1) et (B2), le mélange de (B2) et (B3), le mélange de (B1) et (B3) et le mélange de (B1), (B2) et (B3). Ce qui signifie que l'on greffe un mélange comprenant soit du miPP sans polymère (A) et sans polymère (B), soit du miPP et du polymère (A), soit du miPP et du polymère (B), soit encore du miPP, du polymère (A) et du polymère (B). Avantageusement la proportion de polymères (A) et/ou (B) représente moins de 40 % en poids de l'ensemble du miPP et du polymère (A) et /ou du polymère (B).

Le polypropylène isotactique obtenu par catalyse métallocène, abrégé dans la suite du texte par miPP, et les systèmes permettant sa synthèse sont connus et décrits dans les références suivantes de la demanderesse: US 6 214 949; US 5 968 854; EP 856 525; US 5 789 502; EP 849 286; EP 802 206; US 5 561 092; EP 581 754.

Le polypropylène isotactique obtenu par catalyse métallocène (miPP) est selon les références ci-dessus un polymère comprenant de 0 à 10 % en poids d'un comonomère ou d'un mélange de comonomères choisis parmi l'éthylène, le butène, l'isobutylène et le 4-méthyl pentène.

S'agissant du polymère (A), il est choisi parmi les polyéthylènes homo- ou copolymères.

A titre de comonomères, on peut citer :
- les alpha-oléfines, avantageusement celles ayant de 3 à 30 atomes de carbone. Des exemples d'alpha-oléfines ayant 3 à 30 atomes de carbone comme comonomères éventuels comprennent le propylène, 1-butène, 1-pentène, 3-méthyl-1-butène, 1-hexène, 4-méthyl-1-pentène, 3-méthyl-1-pentène, 1-octène, 1-décène, 1-dodécène, 1-tétradécène, 1-hexadécène, 1-octadécène, 1-eicocène, 1-dococène, 1-tétracocène, 1-hexacocène, 1-octacocène, et 1-triacontène. Ces alpha-oléfines peuvent être utilisées seules ou en mélange de deux ou de plus de deux.
- les esters d'acides carboxyliques insaturés tels que par exemple les (méth)acrylates d'alkyle, les alkyles pouvant avoir jusqu'à 24 atomes de carbone. Des exemples d'acrylate ou méthacrylate d'alkyle sont notamment le méthacrylate de méthyle, l'acrylate d'éthyle, l'acrylate de n-butyle, l'acrylate d'isobutyle, l'acrylate de 2-éthylhexyle.
- les esters vinyliques d'acides carboxyliques saturés tels que par exemple l'acétate ou le propionate de vinyle.
- les époxydes insaturés. Des exemples d'époxydes insaturés sont notamment : les esters et éthers de glycidyle aliphatiques tels que l'allylglycidyléther, le vinylglycidyléther, le maléate et l'itaconate de glycidyle, l'acrylate et le méthacrylate de glycidyle, et les esters et éthers de glycidyle alicycliques tels que le 2-cyclohexène-1-glycidyléther, le cyclohexène-4,5-diglycidylcarboxylate, le cyclohexène-4-glycidyl carboxylate, le 5-norbornène-2-méthyl-2-glycidyl carboxylate et l'endocis-bicyclo(2,2,1)-5-heptène-2,3-diglycidyl dicarboxylate.
- les acides carboxyliques insaturés, leurs sels, leurs anhydrides. Des exemples d'anhydrides d'acide dicarboxylique insaturé sont notamment l'anhydride maléique, l'anhydride itaconique, l'anhydride citraconique, l'anhydride tétrahydrophtalique.
- les diènes tels que par exemple le 1,4-hexadiène.

Le polymère (A) peut comprendre plusieurs comonomères.

Avantageusement le polymère (A), qui peut être un mélange de plusieurs polymères, comprend au moins 50 % et de préférence 75 % en moles d'éthylène. La densité de (A) peut être comprise entre 0,86 et 0,98 g/cm3. Le MFI (indice de viscosité à 190°C, sous 2,16 kg) est compris avantageusement entre 1 et 1000 g/10 min.

A titre d'exemple de polymères (A), on peut citer :
- le polyéthylène basse densité (LDPE)
- le polyéthylène haute densité (HDPE)
- le polyéthylène linéaire basse densité (LLDPE)
- le polyéthylène très basse densité (VLDPE)
- le polyéthylène obtenu par catalyse métallocène, c'est-à-dire les polymères obtenus par copolymérisation d'éthylène et d'alphaoléfine telle que propylène, butène, héxène ou octène en présence d'un catalyseur monosite constitué généralement d'un atome de zirconium ou de titane et de deux molécules cycliques alkyles liées au métal. Plus spécifiquement, les catalyseurs métallocènes sont habituellement composés de deux cycles cyclopentadiéniques liés au métal. Ces catalyseurs sont fréquemment utilisés avec des aluminoxanes comme cocatalyseurs ou activateurs, de préférence le méthylaluminoxane (MAO). L'hafnium peut aussi être utilisé comme métal auquel le cyclopentadiène est fixé. D'autres métallocènes peuvent inclure des métaux de transition des groupes IV A, V A, et VI A. Des métaux de la série des lanthanides peuvent aussi être utilisés.
- les élastomères EPR (éthylène - propylène - rubber) ;
- les élastomères EPDM (éthylène - propylène - diène) ;
- les mélanges de polyéthylène avec un EPR ou un EPDM ;
- les copolymères éthylène/(méth)acrylate d'alkyle pouvant contenir jusqu'à 60 % en poids de (méth)acrylate d'alkyle et de préférence de 2 à 40 % ;
- les copolymères éthylène/(méth)acrylate d'alkyle/anhydride maléique obtenus par copolymérisation des trois monomères, les proportions de (méth)acrylate d'alkyle étant celles des copolymères ci-dessus, la quantité d'anhydride maléique étant de 0 à 10 % et de préférence de 0,2 à 6 % en poids.
- les copolymères éthylène/acétate de vinyle/anhydride maléique obtenus par copolymérisation des trois monomères, les proportions de l'acétate de vinyle étant les mêmes que celles du (méth)acrylate d'alkyle dans les copolymères précédents et les proportions de MAH étant les mêmes que celles des copolymères ci-dessus.

S'agissant du polymère (B1), c'est un polypropylène isotactique homo- ou copolymère obtenu par catalyse Ziegler-Natta (zniPP). A titre de comonomères, on peut citer :
- les alpha oléfines, avantageusement celles ayant de 3 à 30 atomes de carbone. Des exemples de telles alphaoléfines sont les mêmes que pour (A) sauf à remplacer le propylène par l'éthylène dans la liste,
- les diènes

Le polymère (B1) peut être aussi un copolymère à blocs polypropylène.

A titre d'exemple de polymère (B1) on peut citer :
- le polypropylène
- les mélanges de polypropylène et d'EPDM ou d'EPR.

Avantageusement le polymère (B1), qui peut être un mélange de plusieurs polymères, comprend au moins 50 % et de préférence 75 % en moles de propylène.

S'agissant du polymère (B2), il est choisi parmi le poly(1-butène) ou les copolymères du 1-butène avec l'éthylène ou une autre alpha oléfine ayant de 3 à 10 atomes de carbones, sauf le propylène (B1) déjà cité.

S'agissant du polymère (B3),il est choisi parmi le polystyrène ou les copolymères du styrène. Parmi les copolymères, on peut citer à titre d'exemple les diènes ayant de 4 à 8 atomes de carbone.

S'agissant du monomère fonctionnel, il est insaturé et non aromatique. On peut citer à titre d'exemple les alcoxysilanes, les acides carboxyliques et leurs dérivés, les chlorures d'acides, les isocyanates, les oxazolines, les époxydes, les amines ou les hydroxydes.

Parmi les alcoxysilanes portant une insaturation, on peut citer :
- les vinyltrialcoxysilanes CH₂=CH-Si(OR)₃ ;
- les allyltrialcoxysilanes CH₂=CH-CH₂-Si(OR)₃ ;
- les (méth)acryloxyalkyltrialcoxysilanes (ou (méth)acrylsilanes)
CH₂=CR₁-CO-O-Y-Si(OR)₃ dans lesquels: R est un alkyl ayant de 1 à 5 atomes de carbone ou un alcoxyle -R₂OR₃ dans lequel R₂ et R₃ sont des alkyles ayant au plus 5 atomes de carbone pour l'ensemble R₂ et R₃ ; R₁ est un hydrogène ou un méthyle ; Y est un alkylène ayant de 1 à 5 atomes de carbone.

On utilise, par exemple, des vinylsilanes tels que le triméthoxyvinylsilane, triéthloxyvinylsilane, tripropoxyvinylsilane, tributoxyvinylsilane, tripentoxyvinylsilane, tris(β-méthoxyéthoxy)-vinylsilane, des allylsilanes tels que le triméthoxyallylsilane, triéthoxyallylsilane, tripropoxyallylsilane, tributoxyallylsilane, tripentoxyallylsilane, des acrylsilanes tels que l'acryloxyméthyltriméthoxysilane, méthacryloxyméthylméthoxysilane, acryloxyéthyltriméthoxysilane, méthacryloxyméthylméthoxysilane, acryloxyéthyltriméthoxysilane, méthacryloxyéthyltriméthoxysilane, acryloxypropyltriméthoxysilane, méthacryloxypropyltriméthoxysilane, acryloxybutyltriméthoxysilane, méthacryloxybutylméthoxysilane, acryloxyéthyltriéthoxysilane, méthacryloxyéthyltriéthoxysilane, méthacryloxyéthyltripropoxysilane, acryloxypropyltributoxysilane, ou le méthacryloxypropyltripentoxysilane.

On peut aussi utiliser des mélanges de ces produits. On utilise de préférence
- le vinyltriméthoxysilane (VTMO) CH₂=CH-Si-(OCH₃)₃ ;
- le vinyltriéthoxysilane (VTEO) CH₂=CH-Si-(OCH₂CH₃)₃ ;
- le vinyltriméthoxyéthoxysilane (VTMOEO) CH₂=CH-Si-(OCH₂OCH₂CH₃)₃ ; et
- le (3-(méthacryloxy)propyl)triméthoxysilane CH₂=C(CH₃)-C(O)O-(CH₂)₃-Si(OCH₃)₃

Des exemples d'acides carboxyliques insaturés sont ceux ayant 2 à 20 atomes de carbone tels que les acides acrylique, méthacrylique, maléique, fumarique et itaconique. Les dérivés fonctionnels de ces acides comprennent par exemple les anhydrides, les dérivés esters, les dérivés amides, les dérivés imides et les sels métalliques (tels que les sels de métaux alcalins) des acides carboxyliques insaturés.

Des acides dicarboxyliques insaturés ayant 4 à 10 atomes de carbone et leurs dérivés fonctionnels, particulièrement leurs anhydrides, sont des monomères de greffage particulièrement préférés.

Ces monomères de greffage comprennent par exemple les acides maléique, fumarique, itaconique, citraconique, allylsuccinique, cyclohex-4-ène-1,2-dicarboxylique, 4-méthyl-cyclohex-4-ène-1,2-dicarboxylique, bicyclo(2,2,1)hept-5-ène-2,3-dicarboxylique, x-méthylbicyclo(2,2,1-hept-5-ène-2,3-dicarboxylique, les anhydrides maléique, itaconique, citraconique, allylsuccinique, cyclohex-4-ène-1,2-dicarboxylique, 4-méthylènecyclohex-4-ène-1,2-dicarboxylique, bicyclo(2,2,1)hept-5-ène-2,3-dicarboxylique, et x-méthylbicyclo(2,2,1)hept-5-ène-2,2-dicarboxylique.

Des exemples d'autres monomères de greffage comprennent des esters alkyliques en C1-C8 ou des dérivés esters glycidyliques des acides carboxyliques insaturés tels que acrylate de méthyle, méthacrylate de méthyle, acrylate d'éthyle, méthacrylate d'éthyle, acrylate de butyle, méthacrylate de butyle, acrylate de glycidyle, méthacrylate de glycidyle, maléate de mono-éthyle, maléate de diéthyle, fumarate de monométhyle, fumarate de diméthyle, itaconate de monométhyle, et itaconate de diéthyle ; des dérivés amides des acides carboxyliques insaturés tels que acrylamide, méthacrylamide, monoamide maléique, diamide maléique, N-monoéthylamide maléique, N,N-diéthylamide maléique, N-monobutylamide maléique, N,N-dibutylamide maléique, monoamide fumarique, diamide fumarique, N-monoéthylamide fumarique, N,N-diéthylamide fumarique, N-monobutylamide fumarique et N,N-dibutylamide fumarique ; des dérivés imides des acides carboxyliques insaturés tels que maléimide, N-butylmaléimide et N-phénylmaléimide ; et des sels métalliques d'acides carboxyliques insaturés tels que acrylate de sodium, méthacrylate de sodium, acrylate de potassium, et méthacrylate de potassium.

Divers procédés connus peuvent être utilisés pour greffer la composition de miPP comprenant éventuellement (A) et/ou (B) par un monomère de greffage.

Par exemple, on peut réaliser le greffage en chauffant cette composition à température élevée, environ 150°C à environ 300°C, en présence ou non d'un solvant avec ou sans initiateur de radicaux.

Des solvants appropriés pouvant être utilisés dans cette réaction sont le benzène, toluène, xylène, chlorobenzène, cumène, entre autres.

Des initiateurs de radicaux appropriés pouvant être utilisés comprennent le t-butyl-hydroperoxyde, cumène-hydroperoxyde, di-iso-propyl-benzène-hydroperoxyde, di-t-butyl-peroxyde, t-butyl-cumyl-peroxyde, (dicumyl-peroxyde, 1,3-bis-(t-butylperoxy-isopropyl)benzène, acétyl-peroxyde, benzoyl-peroxyde, iso-butyryl-peroxyde, bis-3,5,5-triméthyl-hexanoyl-peroxyde, et méthyl-éthyl-cétone-peroxyde.

Le miPP et éventuellement (A) et/ou (B) peuvent être prémélangés à sec ou à l'état fondu puis être greffés à l'état fondu ou en solution dans un solvant. Ils peuvent aussi être ajoutés séparément dans un dispositif de mise en contact et malaxage (par exemple une extrudeuse) avec le monomère de greffage et l'initiateur de radicaux. On peut utiliser les dispositifs habituels de mélange et malaxage de l'industrie des thermoplastiques.

La quantité du monomère de greffage peut être choisie d'une façon appropriée mais elle est de préférence de 0,01 à 10 %, de préférence de 0,1 à 5 %, par rapport au poids de la composition de miPP comprenant éventuellement le polymère (A) et/ou le polymère (B), greffée. La quantité du monomère greffé est déterminée par dosage des fonctions succiniques par spectroscopie IRTF.

L'invention concerne aussi une composition comprenant du miPP greffé puis éventuellement dilué dans au moins une polyoléfine (C1) et/ou dans au moins un polymère à caractère élastomérique (D).

La polyoléfine (C1) peut être choisie parmi les polymères (A), (B) et le miPP.

Le polymère (D) est un polymère à caractère élastomérique, c'est-à-dire qu'il peut être :
- (i) un élastomère au sens de ASTM D412 signifiant qu'il peut être étiré à température ambiante à deux fois sa largeur, maintenu ainsi 5 minutes puis revenir à moins de 10 % près à sa longueur initiale quand il est relâché ; ou
- (ii) un polymère n'ayant pas exactement les caractéristiques précédentes mais pouvant être étiré et revenir sensiblement à sa longueur initiale.

Avantageusement le MFI de (D) est compris entre 0,1 et 50 g/10 min.

A titre d'exemple de polymères (D) on peut citer :
- les EPR (éthylène propylène rubber) et les EPDM (éthylène propylène diène) ;
- les polyéthylènes obtenus par catalyse métallocène et de densité inférieure à 0,910 g/cm³ ;
- les polyéthylènes de type VLDPE (PE très basse densité);
- les élastomères styréniques tels que les SBR (styrène -butadiène-rubber), les copolymères blocs styrène/butadiène/styrène (SBS), les copolymères blocs styrène/éthylène/butène/styrène (SEBS) et les copolymères blocs styrène/isoprène/styrène (SIS) ;
- les copolymères de l'éthylène et d'au moins un ester d'acide carboxylique insaturé (déjà défini plus haut pour (A)) ;
- les copolymères de l'éthylène et d'au moins un ester vinylique d'acide carboxylique saturé (déjà défini plus haut pour (A)).

La quantité de (C1) et/ou (D) est avantageusement de 20 à 1000 et de préférence 60 à 500 parties (en poids) pour 10 parties de miPP greffé. Avantageusement, on utilise (C1) et (D). Les proportions préférées sont telles que (D)/(C1) est compris entre 0 et 1 et plus particulièrement entre 0 et 0,5.

La composition selon l'invention peut être fabriquée par les moyens habituels des thermoplastiques par mélange des différents constituants à l'état fondu dans des extrudeuses bivis BUSS, des malaxeurs ou des mélangeurs à cylindre.

Cette composition peut comprendre divers additifs tels que des antioxydants, des absorbeurs d'ultra-violets, des agents antistatiques, des pigments, des colorants, des agents de nucléation, des charges, des agents de glissement, des lubrifiants, des produits ignifuges et des agents anti-blocage.

S'agissant de la structure multicouche selon l'invention, elle comprend une couche (L) comprenant la composition selon l'invention et directement attachée à celle-ci une couche (E) pouvant être une couche (i) de résine polaire oxygénée ou azotée, (ii) d'un oxyde minéral déposé sur un polymère tel que le polyéthylène (PE), le polyéthylènetéréphtalate (PET) ou le copolymère éthylène/alcool vinylique (EVOH), ou (iii) une couche métallique ou métalloplastique.

Des exemples de résines polaires préférées dans la couche (E) sont les résines de polyamide, un copolymère éthylène/acétate de vinyle saponifié ou EVOH, et les polyesters.

Plus spécifiquement, ces résines polaires comprennent des polyamides synthétiques à longue chaîne ayant des motifs structurels du groupe amide dans la chaîne principale, tels que le PA-6, PA-6,6, PA-6,10, PA-11 et le PA-12 ; un copolymère éthylène/acétate de vinyle saponifié ayant un degré de saponification d'environ 90 à 100% en moles, obtenu en saponifiant un copolymère éthylène/acétate de vinyle ayant une teneur en éthylène d'environ 15 à environ 60 % en moles ; des polyesters tels que le polyéthylène-téréphtalate (PET), le polybutylène-téréphtalate (PBT), le polyéthylène naphténate et des mélanges de ces résines polaires.

La couche d'oxyde minéral peut être par exemple de la silice, déposée sur une couche de PE, PET ou EVOH. Dans ce cas, la structure selon l'invention comprend donc successivement : une couche de liant comprenant la composition selon l'invention attachée à une couche de SiO₂ (ou SiOₓ) elle-même déposée sur une couche de PE, de PET ou d'EVOH.

La couche métallique peut être par exemple une pellicule ou une feuille d'un métal tel que l'aluminium, le fer, le cuivre, l'étain et le nickel, ou un alliage contenant au moins un de ces métaux comme constituant majoritaire. L'épaisseur de la pellicule ou de la feuille est par exemple d'environ 0,01 à environ 0,2 mm. Il est de pratique courante de dégraisser la surface de la couche métallique avant de laminer sur elle le liant comprenant la composition selon l'invention. Cette couche (E) peut aussi être une couche métalloplastique telle que par exemple une feuille de PET recouverte d'aluminium.

On ne sortirait pas du cadre de l'invention si la structure précédente était associée à d'autres couches.

L'invention concerne également la structure décrite plus haut associée du côté resté libre de la couche (L) de liant à une couche (F) à base de polyoléfine, la couche de liant permettant ainsi l'adhésion des couches (E) et (F) entre elles. La structure définie ici est de la forme Couche (F)/couche (L)/Couche (E). La polyoléfine de la couche (F) peut être choisie parmi les polymères (A) et (B) décrits plus haut.

Ces structures sont utiles pour faire des emballages, par exemple des corps creux rigides tels que des flacons, des bouteilles, des poches souples, ou des films multicouches.

Les structures selon l'invention sont, par exemple de la forme suivante avec le liant comprenant la composition selon l'invention :
- Couche (F)/couche (L)/Couche (E)/couche (L)/Couche (F) : PE/liant/EVOH/liant/PE ou PP/liant/EVOH/liant/PP
- Couche (F)/couche (L)/Couche (E) : PE/liant/EVOH ou PE/liant/PA ou PP/liant/PA

Ces structures et ces emballages peuvent être fabriqués par coextrusion, lamination, extrusion-soufflage et couchage.

Pour réaliser les essais et comparatifs qui suivent, on a utilisé les produits suivants:
**miPP 1:** miPP contenant 3,5 % d'éthylène, de densité = 0,900 g/cm³ et de MFI = 7 g/10min (à 230°C sous 2,16 kg).
**miPP 2:** miPP contenant 3,5 % d'éthylène, de densité = 0,900 g/cm³ et MFI = 8 g/10 min (à 230°C sous 2,16 kg).
**miPP 3:** miPP contenant 5 % d'éthylène, de densité = 0,900 g/cm³ et de MFI = 2,5 g/10 min (à 230°C sous 2,16 kg).
**PP 3060 MN 5 :** Polypropylène isotactique à blocs propylène et éthylène obtenu par catalyse ziegler-Natta (zniPP), de densité = 0,902 g/cm³ et de MFI= 6 g/10 min (à 230°C sous 2,16 kg).
**PP 3020 GN3 :** Polypropylène copolymère statistique obtenu par catalyse Ziegler-Natta (zniPP), de densité = 0,900 g/cm³ et de MVI (Melt Volume Index)= 2 cm³/10 min (à 230°C sous 2,16 kg).
**MAH :** Anhydride maleique.
**LLDPE :** Polyéthylène linéaire basse densité, de densité = 0,900 g/cm3 et de MFI = 3 g/10 min (à 190°C sous 2,16 kg).

Les produits sont fabriqués en extrudeuse bi-vis corotative de type LEISTRITZ et greffés par de l'anhydride maléïque.

L'extrudeuse comprend 8 zones appelées Z1 à Z8, la zone Z8 étant située en fin d'extrudeuse du côté de la sortie des produits greffés. On opère aux températures habituelles connues de l'homme de l'art.

L'anhydride maléïque, sur poudre de polyéthylène, et le polypropylène à greffer sont introduits en zone Z1 par l'intermédiaire de deux doseurs pondéraux séparés.

L'initiateur radicalaire, pur ou en dilution dans un solvant approprié, est introduit par une pompe doseuse en zone Z2. Les températures dans les zones Z3, Z4 et Z5 sont au moins suffisantes pour que 99,9 % de l'initiateur radicalaire réagisse avant la zone Z6. L'initiateur utilisé est le peroxyde de 2,5-diméthyl-2,5-(ditertiobutyl)-hexane ou DHBP (LUPEROX® 101). Les résidus de l'initiateur radicalaire, le solvant et l'anhydride maléïque n'ayant pas réagi sont dégazés sous vide en zone Z6.

Le débit d'extrusion en sortie de la zone Z8 varie suivant la vitesse de vis imposée entre 12 et 15 kg/h. Le jonc est granulé après refroidissement.

Le tableau 1 rassemble les résultats du greffage du miPP par le MAH pour les exemples Ex2, Ex3 et Ex4 et du zniPP par le MAH pour le comparatif Cp1. Tous les % sont en poids et les % en poids de MAH et d'initiateur sont par rapport à 100 % de miPP ou zniPP selon le cas.

On constate que pour le zniPP greffé (Comparatif Cp1), le MFI obtenu est de 13,5 g/10 min alors qu'il reste inférieur ou égal à 10 g/10 min pour les exemples de miPP greffé selon l'invention (Ex2, Ex3 et Ex4) pour un pourcentage quasi équivalent de MAH greffé.

On a ensuite réalisé en technologie cast une structure à 5 couches successivement et respectivement PP/liant/EVOH/liant/PP dans laquelle :
- PP désigne une couche de polypropylène isotactique obtenu par catalyse Ziegler-Natta (zniPP),
- Liant désigne une couche comprenant la composition définie dans le tableau 2, et
- EVOH désigne une couche de copolymère éthylène/alcool vinylique.

L'épaisseur des couches successives est respectivement en µm: 20/10/10/10/50.

On a ensuite mesuré la force de pelage entre la couche de PP de 20µm et la couche de liant de 10µm. Les compositions de liant en % en poids, les forces de pelage (exprimée en N/15mm à une vitesse de tirage de 200 mm/min) aux temps t=0 (immédiatement après la réalisation de la structure) et t=8jours (8 jours après la réalisation de la structure) et les écarts types (s) sont données dans le Tableau 2.

On constate que les compositions de liant comprenant du miPP greffé donnent de meilleurs résultats d'adhésion que les compositions de liant comprenant du zniPP greffé à la place miPP greffé.

**Tableau 1**

| | PP | (%) | MAH introduit (%) | DHBP introduit (%) | MFI en g/10min (à 190°C, sous 325 g) | %MAH greffe après Etuvage |
|---|---|---|---|---|---|---|
| Cp1 | PP3060 MN 5 | 100 | 1,8 | 0,1600 | 13,5 | 0,58 |
| Ex2 | miPP 1 | 100 | 1,8 | 0,1600 | 8,4 | 0,49 |
| Ex3 | miPP 2 | 100 | 1,8 | 0,1600 | 7,5 | 0,55 |
| Ex4 | miPP 3 | 100 | 1,8 | 0,1600 | 10 | 0,53 |

**Tableau 2**

| **Composition du LIANT** | | | | | | | | | | |
|---|---|---|---|---|---|---|---|---|---|---|
| | **zniPP (C1)** | **(%)** | **PE (D)** | **(%)** | **PP greffé MAH** | **(%)** | **Force de pelage à t=0j (N/15mm)** | **s à t=0j** | **Force de pelage à t=8j (N/15mm)** | **s à t=8j** |
| Ex5 | PP 3020GN3 | 57 | LLDPE | 18 | miPP1 * | 25 | 2,7 | 0,22 | 5,19 | 0,21 |
| Ex6 | PP 3020GN3 | 57 | LLDPE | 18 | miPP2** | 25 | 3,54 | 0,29 | 5,64 | 0,24 |
| Ex7 | PP 3020GN3 | 57 | LLDPE | 18 | miPP3*** | 25 | 4,11 | 0,1 | 5,85 | 0,12 |
| Cp8 | PP 3020GN3 | 57 | LLDPE | 18 | PP3060 MN5*** | 25 | 2,27 | 0,13 | 4,22 | 0,21 |

| | | | | | | | | | | |
|---|---|---|---|---|---|---|---|---|---|---|
| * miPP greffé obtenu dans Ex2 ; ** miPP greffé obtenu dans Ex3 ; *** miPP greffé obtenu dans Ex4 ; ****zniPP greffé obtenu dans Cp1. | | | | | | | | | | |

## Revendications

1. Composition comprenant (le total des pourcentages étant égal à 100 %) :
- 10 à 100 % en poids de polypropylène isotactique homo ou copolymère obtenu par catalyse métallocène (miPP) comprenant de 0 à 10 % en poids d'un comonomère ou d'un mélange de comonomères choisis parmi l'éthylène, le butène, l'isobuthylène et le 4-méthylpentène;
- 0 à 90 % en poids de polyéthylène (A) homo ou co-polymère ;
- 0 à 90 % en poids de polymère (B) choisi parmi le polypropylène isotactique homo ou co-polymère obtenu par catalyse Ziegler-Natta (B1), le poly-(1-butène) homo ou co-polymère (B2), le polystyrène homo ou co-polymère (B3), le mélange de (B1) et (B2), le mélange de (B1) et (B3), le mélange de (B2) et (B3) et le mélange de (B1), (B2) et (B3) ;
ladite composition étant greffée par un monomère fonctionnel.

2. Composition selon la revendication 1, **caractérisée en ce que** le monomère fonctionnel est insaturé non aromatique.

3. Composition selon l'une des revendications 1 ou 2, **caractérisée en ce que** le monomère fonctionnel est pris dans le groupe comprenant les alcoxysilanes, les acides carboxyliques et leurs dérivés, les chlorures d'acides, les isocyanates, les oxazolines, les époxydes, les amines et les hydroxydes.

4. Composition selon l'une des revendications 1 à 3, **caractérisée en ce que** le monomère fonctionnel est l'anhydride maléique.

5. Composition selon l'une des revendications 1 à 4, **caractérisée en ce qu'**au moins un comonomère du polyéthylène (A) co-polymère est choisi parmi les alpha-oléfines ayant de 3 à 30 atomes de carbone, les esters d'acides carboxyliques insaturés, les esters vinyliques d'acides carboxyliques saturés, les époxydes insaturés, les esters et éthers de glycidyle alicycliques, les acides carboxyliques insaturés, leurs sels, leurs anhydrides et les diènes.

6. Composition selon l'une des revendications 1 à 4, **caractérisée en ce que** le polyéthylène (A) est choisi parmi le LDPE, le HDPE, le LLDPE, le VLDPE, le PE obtenu par catalyse métallocène, les élastomères EPR et EPDM et leurs mélanges, les copolymères éthylène/(méth)acrylate d'alkyle, les copolymères éthylène/(méth)acrylate d'alkyle/anhydride maléique, les copolymères éthylène/acétate de vinyle/anhydride maléique.

7. Composition selon l'une des revendications 1 à 6, **caractérisée en ce qu'**elle est diluée dans une polyoléfine (C1) et/ou un polymère à caractère élastomérique (D).

8. Composition selon la revendication 7 dans laquelle la quantité de polyoléfine (C1) et/ou de polymère à caractère élastomérique (D) est avantageusement de 20 à 1000 et de préférence 30 à 500 parties en poids pour 10 parties de polypropylène isotactique obtenu par catalyse métallocène greffé.

9. Composition selon la revendication 7 ou 8 dans laquelle les proportions de polyoléfine (C1) et de polymère à caractère élastomérique (D) sont telles que le rapport (D)/(C1) est compris entre 0 et 1 et plus particulièrement entre 0 et 0,5.

10. Composition selon l'une des revendications précédentes, **caractérisée en ce qu'**elle est comprise dans un liant de coextrusion.

11. Structure multicouche comprenant une couche (L) comprenant une composition selon l'une quelconque des revendications précédentes et directement attachée à ladite couche (L), une couche (E) :
- polaire, azotée ou oxygénée, telle qu'une couche de résine polyamide, de copolymère éthytène/acétate de vinyle saponifié (EVOH), ou de polyester ; ou
- d'un oxyde minéral déposé sur un polymère tel que le PE, le polyéthylène téréphtalate (PET) ou l'EVOH ; ou
- métallique ou métalloplastique.

12. Structure selon la revendication 11 comprenant une couche (F) à base de polyoléfine directement attachée à la couche (L), la couche (L) étant ainsi prise en sandwich entre ladite couche (F) et la couche (E).

## Claims

1. Composition comprising (the total of the percentages being equal to 100%):
- 10 to 100% by weight of isotactic polypropylene homopolymer or copolymer obtained by metallocene catalysis (miPP) comprising from 0 to 10% by weight of a comonomer or of a mixture of comonomers chosen from ethylene, butene, isobutylene and 4-methylpentene;
- 0 to 90% by weight of polyethylene homopolymer or copolymer (A); and
- 0 to 90% by weight of polymer (B) chosen from isotactic polypropylene homopolymer or copolymer obtained by Ziegler-Natta catalysis (B1), poly(1-butene) homopolymer or copolymer (B2), polystyrene homopolymer or copolymer (B3), a blend of (B1) and (B2), a blend of (B1) and (B3), a blend of (B2) and (B3) and a blend of (B1), (B2) and (B3) ;
said composition being grafted by a functional monomer.

2. Composition according to Claim 1, **characterized in that** the functional monomer is unsaturated and nonaromatic.

3. Composition according to either of Claims 1 and 2, **characterized in that** the functional monomer is taken from the group comprising alkoxysilanes, carboxylic acids and their derivatives, acid chlorides, isocyanates, oxazolines, epoxides, amines and hydroxides.

4. Composition according to one of Claims 1 to 3, **characterized in that** the functional monomer is maleic anhydride.

5. Composition according to one of Claims 1 to 4, **characterized in that** at least one comonomer of the polyethylene copolymer (A) is chosen from α-olefins having from 3 to 30 carbon atoms, esters of unsaturated carboxylic acids, vinyl esters of saturated carboxylic acids, unsaturated epoxides, alicyclic glycidyl esters and ethers, unsaturated carboxylic acids, salts thereof, anhydrides thereof and dienes.

6. Composition according to one of Claims 1 to 4, **characterized in that** the polyethylene (A) is chosen from LDPE, HDPE, LLDPE, VLDPE and PE obtained by metallocene catalysis, EPR and EPDM elastomers and blends thereof, ethylene/alkyl (meth)acrylate copolymers, ethylene/alkyl (meth)acrylate/maleic anhydride copolymers and ethylene/vinyl acetate/maleic anhydride copolymers.

7. Composition according to one of Claims 1 to 6, **characterized in that** it is diluted in a polyolefin (C1) and/or a polymer of elastomeric nature (D).

8. Composition according to Claim 7 in which the quantity of polyolefin (C1) and/or of polymer of elastomeric nature (D) is advantageously from 20 to 1000 and preferably 30 to 500 parts by weight per 10 parts of grafted isotactic polypropylene obtained by metallocene catalysis.

9. Composition according to Claim 7 or 8 in which the proportions of polyolefin (C1) and of polymer of elastomeric nature (D) are such that the D/C1 ratio is between 0 and 1 and more particularly between 0 and 0.5.

10. Composition according to one of the preceding claims, **characterized in that** it is incorporated in a coextrusion tie.

11. Multilayer structure comprising a layer (L) comprising a composition according to any one of the preceding claims and, directly attached to said layer (L), a layer (E) that is:
- polar, nitrogen-comprising or oxygen-comprising, such as a layer of polyamide resin, of saponified ethylene/vinyl acetate copolymer (EVOH) or of polyester; or
- of a mineral oxide deposited on a polymer such as PE, polyethylene terephthalate (PET) or EVOH; or
- metallic or metalloplastic.

12. Structure according to Claim 11, comprising a polyolefin-based layer (F) directly attached to layer (L), layer (L) thus being sandwiched between said layer (F) and layer (E).

## Patentansprüche

1. Zusammensetzung, umfassend (wobei die Summe der Prozentwerte gleich 100 % ist):
- 10 bis 100 Gew.-% an isotaktischem Polypropylenhomopolymer oder -copolymer, welches durch Metallocenkatalyse erhalten wurde und 0 bis 10 Gew.-% eines Comonomers oder einer Comonomermischung umfasst, wobei diese aus Ethylen, Buten, Isobutylen und 4-Methylpenten gewählt werden;
- 0 bis 90 Gew.-% an Polyethylenhomopolymer oder -copolymer (A);
- 0 bis 90 Gew.-% an Polymer (B), das aus isotaktischem Polypropylenhomopolymer oder - copolymer (B1), welches durch Ziegler-Natta-Katalyse erhalten wurde, Poly-1-butenhomopolymer oder -copolymer (B2), Polystyrolhomopolymer oder -copolymer (B3), der Mischung aus (B1) und (B2), der Mischung aus (B1) und (B3), der Mischung aus (B2) und (B3) sowie der Mischung aus (B1), (B2) und (B3) gewählt wird;
wobei die Zusammensetzung mit einem durch Pfropfen eingeführten funktionellen Monomer versehen ist.

2. Zusammensetzung gemäß dem Anspruch 1, **dadurch gekennzeichnet, dass** das funktionelle Monomer ungesättigt und nicht aromatisch ist.

3. Zusammensetzung gemäß einem der Ansprüche 1 oder 2, **dadurch gekennzeichnet, dass** das funktionelle Monomer aus der Gruppe gewählt wird, die die Alkoxysilane, die Carbonsäuren und deren Derivate, die Säurechloride, die Isocyanate, die Oxazoline, die Epoxide, die Amine und die Hydroxide umfasst.

4. Zusammensetzung gemäß einem der Ansprüche 1 bis 3, **dadurch gekennzeichnet, dass** es sich bei dem funktionellen Monomer um Maleinsäureanhydrid handelt.

5. Zusammensetzung gemäß einem der Ansprüche 1 bis 4, **dadurch gekennzeichnet, dass** mindestens ein Comonomer des Polyethylencopolymers (A) aus den alpha-Olefinen mit 3 bis 30 Kohlenstoffatomen, den Estern ungesättigter Carbonsäuren, den Vinylestern gesättigter Carbonsäuren, den ungesättigten Epoxiden, den alicyclischen Glycidylestern und -ethern, den ungesättigten Carbonsäuren, deren Salzen, deren Anhydriden und deren Dienen gewählt wird.

6. Zusammensetzung gemäß einem der Ansprüche 1 bis 4, **dadurch gekennzeichnet, dass** das Polyethylen (A) aus LDPE, HDPE, LLDPE, VLDPE und PE, welches durch Metallocenkatalyse erhalten wurde, sowie aus den Elastomeren EPR und EPDM und ihren Mischungen sowie aus Ethylen/Alkyl(meth)acrylat-Copolymeren, Ethylen/Alkyl(meth)acrylat/Maleinsäureanhydrid-Copolymeren und Ethylen/Vinylacetat/Maleinsäureanhydrid-Copolymeren gewählt wird.

7. Zusammensetzung gemäß einem der Ansprüche 1 bis 6, **dadurch gekennzeichnet, dass** sie in einem Polyolefin (C1) und/oder einem elastomerartigen Polymer (D) verdünnt wird.

8. Zusammensetzung gemäß dem Anspruch 7, wobei die Menge an Polyolefin (C1) und/oder elastomerartigem Polymer (D) vorteilhafterweise zwischen 20 und 1000 Gewichtsteilen sowie vorzugsweise zwischen 30 und 500 Gewichtsteilen für 10 Teile des isotaktischen Polypropylens, das durch Metallocenkatalyse erhalten und einer Pfropfung unterzogen wurde, liegt.

9. Zusammensetzung gemäß den Ansprüchen 7 oder 8, wobei die Mengenanteile des Polyolefins (C1) und des elastomerartigen Polymers (D) derart sind, dass das Verhältnis (D)/(C1) zwischen 0 und 1 liegt sowie insbesondere zwischen 0 und 0,5 liegt.

10. Zusammensetzung gemäß einem der vorhergehenden Ansprüche, **dadurch gekennzeichnet, dass** sie ein Bindemittel für die Coextrusion umfasst.

11. Mehrschichtige Struktur, die eine Schicht (L) umfasst, welche wiederum eine Zusammensetzung gemäß einem beliebigen der vorhergehenden Ansprüche umfasst, wobei unmittelbar mit der Schicht (L) eine Schicht (E) verbunden ist, die folgende Eigenschaften aufweist:
- polar, stickstoffhaltig oder sauerstoffhaltig, wie etwa eine Schicht aus Polyamidharz, aus verseiftem Ethylen/Vinylacetat-Copolymer (EVOH) oder aus Polyester; oder
- aus einem mineralischen Oxid, welches auf ein Polymer wie etwa PE, Polyethylenterephthalat oder EVOH aufgebracht wurde, bestehend; oder
- metallisch oder metalloplastisch.

12. Struktur gemäß dem Anspruch 11, welche eine Schicht (F) auf Basis von Polyolefin, welche direkt mit der Schicht (L) verbunden ist, umfasst, wobei die Schicht (L) sich sandwichartig zwischen der Schicht (F) und der Schicht (E) befindet.
